# EUROPEAN PATENT APPLICATION

(11) **EP 0 627 863 A2**
(43) Date of publication of application: **07.12.1994**
(21) Application number: 94105451.2
(22) Date of filing: 08.04.1994
(51) Int. Cl.: H04Q 7/00, H04B 5/04

(54) **An automated system for processing multiple paging requests**

(30) Priority: 04.06.1993 US 73224
(71) Applicant: International Business Machines Corporation, Armonk, N.Y. 10504 (US)
(72) Inventor: Greenwood, Michael Cory, Carmel, New York 10512 (US); Kahn, Martin, Mount Kisco, New York 10549 (US)
(74) Representative: Schäfer, Wolfgang, Dipl.-Ing.

(57) **Abstract**

A system and program for concurrently accepting a plurality of page requests or messages, in "stand-alone" and over a network using a plurality of protocols, and providing those requests to one or a plurality of modems which can concurrently transmit page requests to several paging service carriers. The program may run on a multi-tasking operating system, such as the IBM OS/2, that supports multiple communications protocols and is preferably written in the C or C + + language and uses a combination of the IBM REXX program, incorporated in the OS/2 operating system, and C (IBM C2) and extensions to C. The system comprises an input component capable of concurrently accepting a plurality of page requests or messages; a queueing component or program for placing the plurality of page requests accepted by the input component in a queue; a program for concurrently selecting page requests from the queue for forwarding; and one or more modems for receiving page requests selected from the queue and forwarding the requests to one or more paging service carriers. The modems may forward different page requests or messages, from among the plurality of page messages received, to different paging services and the page messages accepted may involve different protocols and contain address information which is used in addressing the messages for forwarding to the paging service carriers. More than one page request may be sent during a telephone call and means may be provided for automatically resending a page message in response to an error message from a paging service. The selecting process may use automatic prioritizing of the selecting of page messages from the queue and recording of the page messages selected.

## Description

### BACKGROUND OF THE INVENTION

### FIELD OF THE INVENTION

The present invention relates to the field of electronic paging and, more particularly, to a system and method for processing a flow of page requests from various sources and of various protocols to expedite their forwarding to paging service carriers for broadcast to their respective page destinations.

### PROBLEM TO BE SOLVED

The basic elements of an electronic paging system are a method and means for 1) receiving page requests in the form of electronic signals, e.g. from sources on a network, 2) processing the page request signals, 3) forwarding the processed page requests to a paging service carrier, usually via a modem, and 4) the transmitting or broadcasting of the requests by the paging service carrier to the subjects to be paged. The page requests may be generated in various ways but such systems usually have some form of computer component for receiving and processing the request signals. Many such paging systems are DOS based and run "stand alone", i.e., they do not receive page requests via a network, but rather, directly from a workstation on which the processing system is running. Typically these paging systems support only one modem communicating with one paging service at a time. Consequently, a paging user with a heavy volume of paging traffic, i.e., page messages to be forwarded to one or more paging services, must expend time consuming effort and experience delays and possible loss and confusion in attempting to handle the orderly transmission of its page requests.

### OBJECTS OF THE INVENTION

It is therefore an object of the invention to provice a system and method for expediting the flow of paging requests or messages from their sources to the addressed paging service carrier.

It is another object of the invention to provide a system and method for queueing page requests, received from various sources and having different protocols, to facilitate their processing.

It is a further object of the invention to provide a system and method that are capable of efficiently handling large volumes of page request traffic in an expeditions manner for transmission to one or more paging service carriers.

### SUMMARY OF THE INVENTION

The present invention involves a system and method for concurrently accepting a plurality of page requests or messages, in "stand alone" and/or over a network using a plurality of protocols, and providing those requests to a modem or a plurality of modems that can concurrently transmit page requests by telephone or otherwise to several paging service carriers. A particular embodiment of the system may be designed to run on a multi-tasking operating system which supports multiple communications protocols, such as the IBM OS/2 operating system or perhaps the Microsoft Windows NT system. Although the paging system may be written in several different languages, C or C + + is the preferred language. Also, the system preferably uses a combination of the IBM REXX program, incorporated in the OS/2 operating system, and C (IBM C2) and extensions to C as will be understood with reference to the commercially-available program product "IBM OS/2 Programmers Toolkit".

The system is constructed using the following fundamental components:
an input component capable of concurrently accepting a plurality of page requests or messages;
a queueing component or program for placing the plurality of page requests accepted by the input component in a queue;
a program for concurrently selecting page requests from the queue for forwarding; and one or more modems for receiving page requests selected from the queue and forwarding the requests to one or more paging service carriers.

The system may use the modems to forward different page requests or messages, from among the plurality of page messages received, to different paging services, and the page messages accepted may involve different protocols and contain address information which is used in addressing the messages for forwarding to the paging service carriers. More than one page request may be sent during a telephone call and means may be provided for automatically resending a page message in response to an error message from the paging service. The selecting process may use means for automatically prioritizing the selecting of page messages from the queue, and means for maintaining a record of the page messages selected.

### BRIEF DESCRIPTION OF THE DRAWINGS

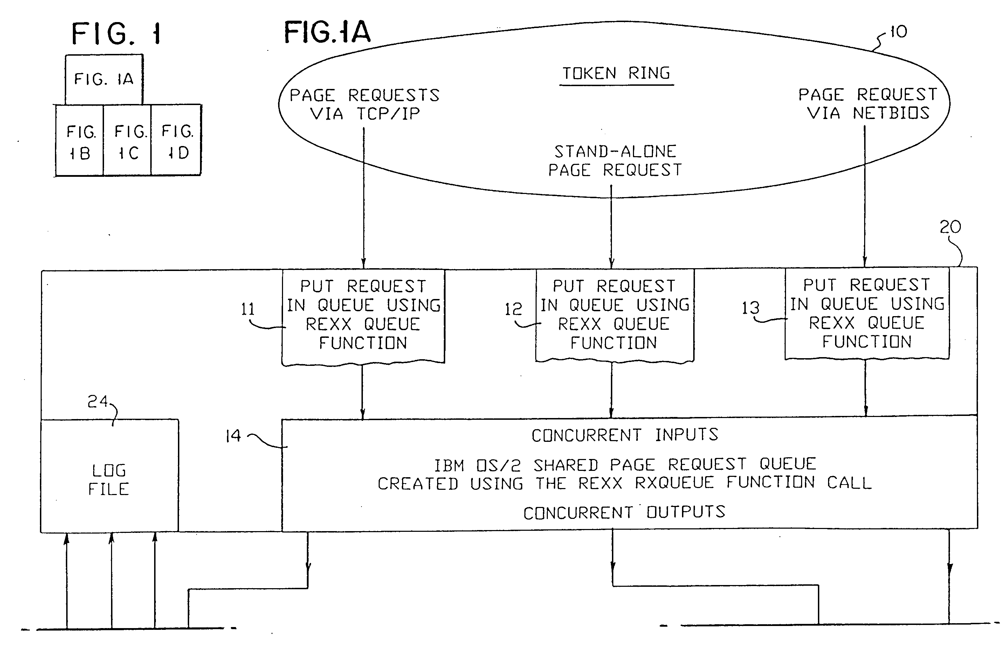

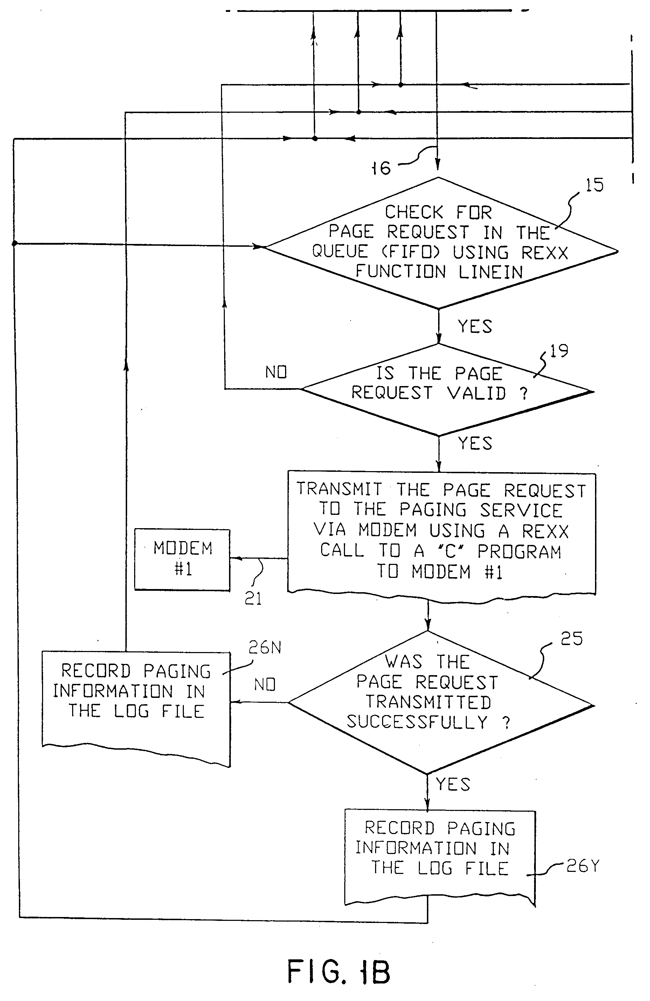

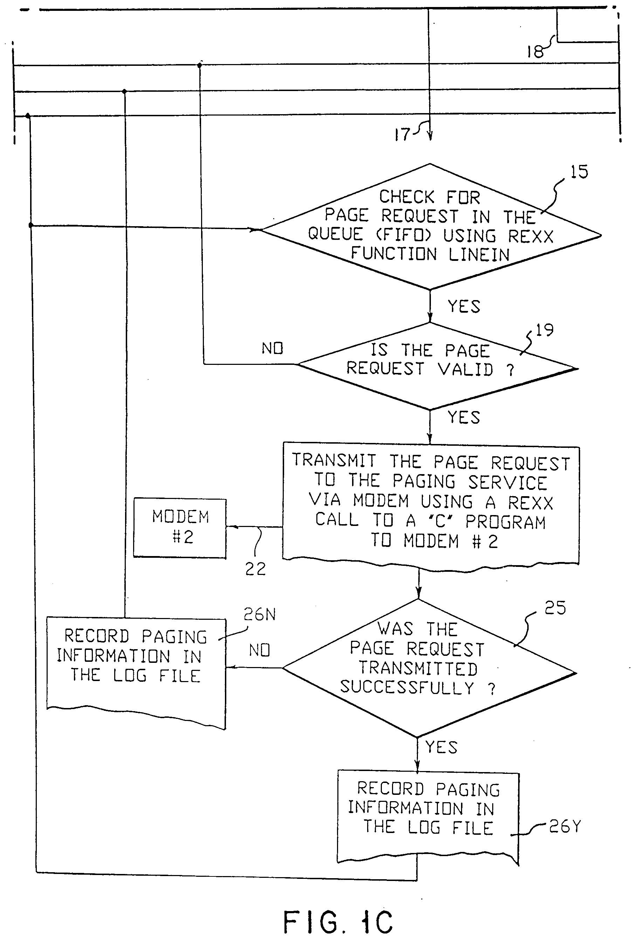

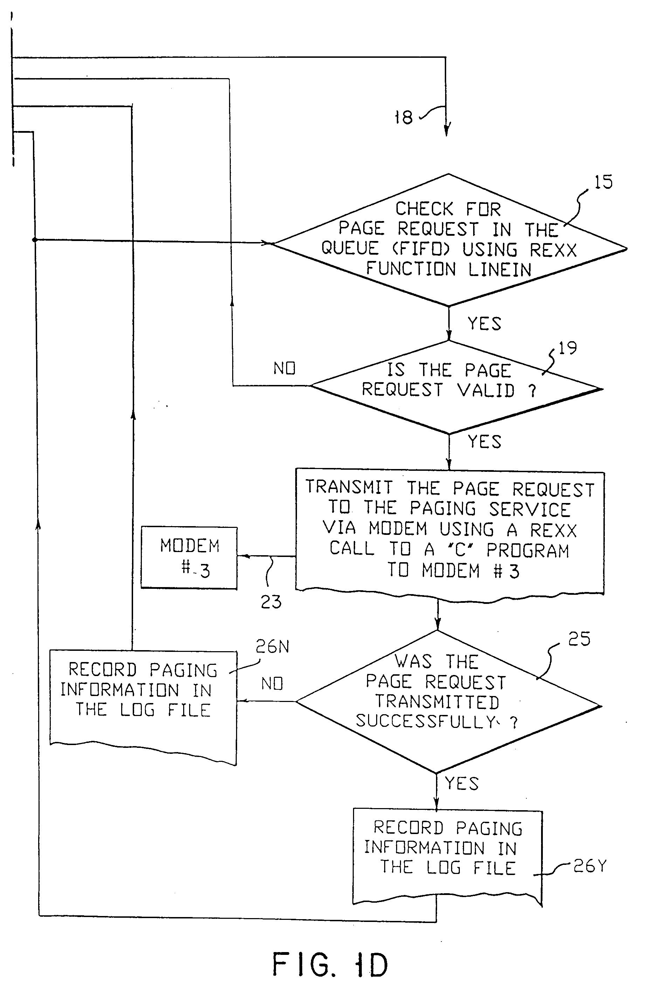

Figure 1 is a flow diagram of a system and process that functions in accordance with the invention.

### DETAILED DESCRIPTION OF THE PREFERRED EMBODIMENTS

A preferred embodiment of the invention will be described in the form of a paging system running on a particular platform, that is, the commercially-available IBM OS/2 computer operating system. However, it will be understood that the invention may be readily adapted to run on many different platforms and, in the light of the following description, such adaptation will be within the purview of a skilled programmer.

IBM's OS/2 operating system is suitable in this application in that it can support the commonly-used NetBios and TCP/IP communications protocols, and since it is multi-tasking it can run several programs concurrently for concurrent processing of page requests. The paging system code is preferably written in the C programming language and REXX (a well-known interpretive programming language). The code also preferably supports the Motorola IXO and TAP paging protocols since they are a paging industry standard in the USA. IXO and TAP are protocols used by paging systems to transmit page requests to paging service carriers via modem. IXO and TAP protocols run in either manual mode or automatic mode. When dialing into a paging service carrier using manual mode there is a prompt with text for each step of the process required to transmit the page request to the paging service. The text prompts are usually different for each paging service carrier. The advantage of using manual mode communications is that such communications are generally easier to implement in a program. The disadvantages are less reliability, flexibility, and portability. In view of these disadvantages the system of the invention uses automatic mode communications although the use of the manual mode is also contemplated. Automatic mode communications use control characters to govern communications. This eliminates concerns about portability because the control characters, as defined in the IXO and TAP protocols, are the same from paging service to paging service, for paging service carriers using Motorola IXO and TAP protocols. Motorola IXO and TAP protocols also support placing a plurality of page messages to a paging service carrier in one phone call.

Having defined the specific method of communication to be used for IXO and TAP communications, development of a paging program can be begun. It is a particular feature of the invention that the paging system have the capability of placing page requests in a queue and of processing page requests taken out of the queue. Page request processing prioritization may be accomplished in various ways but for most purposes using a simple first-in-first-out (FIFO) removal of page requests from the queue is preferred. Other processing prioritizations based on time or source may then be implemented readily. It will be understood that a page request may merely contain an address to which a paging signal is to be sent or may also contain an accompanying message for transmitting to the address. Although the terms "page requests" and "page messages" may be used somewhat interchangably herein, both terms are intended to mean a page request with or without a message except where a message is essentially required in the context of the description.

To build a system in accordance with the invention the following fundamental components are appropriately assembled to run the program:
an input component capable of concurrently accepting a plurality of page requests or messages;
a queueing component or program for placing the plurality of page requests accepted by the input component in a queue;
a program for concurrently selecting page requests from the queue for forwarding; and one or more modems for receiving page requests selected from the queue and forwarding the requests to one or more paging service carriers.

It is a feature of the present system that the modems forward different page messages, from among the plurality of page messages received, to different paging service carriers, and that the page messages, accepted by the input component, involve different protocols and contain address information which is used in addressing the messages for forwarding to the paging service carriers. More than one page message may be sent during a telephone call and means may be provided for automatically resending a page message in response to an error message from the paging service. The selecting process may use means for automatically prioritizing the selecting of page messages from the queue (preferably FIFO) and means for making a record, such as in a log file, of the page messages selected.

A first method for implementing the functioning of the foregoing system components in accordance with the invention will be described as noted above in connection with the commercially-available IBM OS/2 computer operating system A suitable algorithm and program for this purpose uses a combination of the C programming language and the interpretive programming language called REXX which comes standard with the IBM OS/2 operating system. To begin with, as will be readily within the ordinary ability of a programmer referring to the REXX documentation provided with the OS/2 operating system, a queue is created using the REXX RXQUEUE, function. Then REXX programs are written to put data into the queue, first by using the RXQUEUE function to set the program to use the correct queue and then by using the REXX QUEUE function to push the page requests into the queue in FIFO. To get data out of the queue, RXQUEUE is used to set the program to the appropriate queue and then the REXX LINEIN("QUEUE:") function is used to pull page requests out of the queue. The program is written to run continuously in a loop waiting for page requests to come into the queue.

In operation, when a request comes into the queue it is "pulled out" by the program just described and is analyzed. The page requests coming into the queue typically contain message information such as a person's name (or nickname), and/or an address, and a message to be sent to the destination associated with the name or nickname or address. Control files (in ASCII text) may be constructed to correlate the names or addresses of persons to be paged with the appropriate pageid (address) and paging service carrier to be dialed, to forward the message to the designated person. Any conversions required for adapting the page requests and messages for transmission by the modem and the paging service may be made by a function within the system prior to dialing the paging service. For example, in one of the control files a paging service name and associated phone numbers and modem settings may be converted to information suitable for handling by the modem and paging service being addressed. In another control file a set of nicknames having a group relationship are included with a Group Name. Page requests that cannot be converted due to specifying an invalid name or nickname are checked and recorded or logged but not forwarded for transmission to a paging service. Requests so logged may be reviewed and put through further processing to determine whatever error or problem may be involved and later converted accordingly.

One such conversion could take place when a page request with a "group name" instead of a nickname is detected. For example, when a page request is received and the nickname specified does not exist in the nickname control file, the program checks to see if the page request is for a group of people, i.e., has a Group Name file address. Upon determining this, the program opens the file which has the same filename as the Group Name nickname in the page request and reads the nicknames therein for sending page requests to the addresses or people named. For instance, if a page request is received for MYSTAFF and there is no MYSTAFF nickname in the nickname control file, the program opens another file called MYSTAFF.FIL and reads the nicknames in that file. A standard program performs the necessary conversions for each nickname and then provides the information to the C program which performs the communications to the appropriate paging service. The C program accepts the information as a command line argument. The format is 〈Communications port〉 〈phone number to dial〉 〈pageid(s)〉 〈message〉. When multiple pageids are specified, the same message will be transmitted to each pager in one phone call.

For an implementation that does not use REXX, group names may be evaluated in the same way, except that the Group Names are checked prior to placing the page requests in the queue, and after the conversion each valid page request is placed in the queue. Also, no command line arguments are used by the communications program to page multiple people in one phone call; instead, using a standard programming loop, the first entry in the queue file is processed. That is, it and all other entries in the queue file for the same paging service are removed and then the program dials the paging services and transmits the appropriate blocks of data.

Once the conversion takes place, using REXX, a C program that has been prepared is called and opens a communications port on the workstation or computer running the OS/2 system and sets the modem settings according to the IXO and TAP specifications using the C functions (DosOpen and DosClose) and DosDevIoctI. With the communications port open, the C function DosWrite can write data to the communications port as defined by the Motorola IXO and TAP protocols. First the program may dial the phone number of the appropriate paging service carrier where there is a modem waiting for "customers" to dial into and place paging requests. When the phone has been dialed and a connection has been made using standard asynchronous communications, standard IXO and TAP communications take place. A standard program loop (such as described in the GLENAYRE ELECTRONICS, Charlotte, N.C., document number GLP-3000-180 on the TAP protocol) is used to build blocks of page messages to be transmitted using standard IXO and protocol communications When all page requests have been transmitted, or error conditions detected and acted upon, the program may use the C function DosClose to close the communications port and then exit, thus returning control to the REXX program that continuously runs in a loop and waits for more page requests to come into the queue.

The Motorola IXO and TAP protocols provide a means for detecting errors, leaving it up to the programmer to determine how to handle those errors. Blocks of page messages can be retransmitted immediately upon detection of an error without hanging up, or a complete hangup of the modem and a redial to the paging service can be made to take place. Either way, the implementation may record the status of each page request in a status file using a standard file writing method. In the present case, the OS/2 operating system ECHO command with redirection to the appropriate log file may be employed. In this implementation, the program that waits for page requests to come into the queue is given a command line argument telling it which communications port to use. This is to permit the same program to be run, with different communications ports specified, simultaneously waiting for page requests to be received. Thus, a number of page requests can be received concurrently. When a request comes in, only one of the programs will be able to "pull" the request out of the queue. That program will transmit that page request to the appropriate paging service. Using this method, several page requests can be "pulled" from the queue and transmitted to several paging services concurrently provided that the OS/2-loaded computer or workstation running the program is appropriately configured with more than one modem and the correct command line arguments are passed to the program that waits for page requests to come into the queue. Since the OS/2 operating system program is multi-tasking it can concurrently place items in the paging queue as well. Consequently, programs which use the REXX QUEUE function can run concurrently, placing page requests in the queue.

In the present implementation, it is possible to support multiple communications protocols frequently supported in a Local Area Network, such as TCP/IP and NetBios. The method allows other workstations which support TCP/IP to issue a REXEC (a TCP/IP command) to the OS/2-loaded computer or workstation running the paging program as described above, which in turn issues a small program written in REXX that calls the appropriate REXX QUEUE function, putting the page request in the paging queue. This is the simplest method for supporting TCP/IP protocols for input to the paging system. It should be noted that to support page requests via REXEC the paging system must be running the TCP/IP REXECD program. In supporting NetBios, the OS/2 Lan Requester program NET, with the ADMIN option (for talking to an OS/2 Lan Server), can be used in a similar fashion. It will be understood that to support ADMIN functions the paging system must be running the IBM OS/2 Lan Server Product. Page requests received in this fashion can be processed concurrently by the OS/2-loaded workstation running the paging program. Requests can be concurrently placed in the queue directly from the workstation running the paging program, by executing the program which places page requests in the queue from separate OS/2 command prompts.

Another method for transmitting page requests for input to the paging system via TCP/IP is via TCP/IP sockets. Using standard TCP/IP socket program techniques, the workstation sending a page request may open a socket that has been created by the paging system. The page request is then transmitted and the socket closed. (Standard TCP/IP socket program techniques are described in UNIX NETWORK PROGRAMMING authored by W. Richard Stevens, ISBN number 0-13-949876-1).

Another method for transmitting page requests to the paging system via NetBios is via Mailslot. Mailslot is supported by IBM's Lan Server and Lan Requester program products. Using IBM Lan Server API functions, a workstation sending a page request would write to the mailslot created by the paging system, using the DosWriteMailslot function. The paging system, having already created the mailslot using the DosCreateMailslot function, waits for page requests to come to the mailslot using the DosReadMailslot function.

An alternative method of implementing the queueing function of the invention uses a program, the programming language of which is entirely in C. First, the program contains code which creates a queue using the C function DosCreateQueue. This same program waits for request items to come into the queue and then writes them to a paging queue file. This operation is carried out using the DosReadQueue function, which reads the page requests from the queue, and then the C functions FOPEN and FWRITE, which write the contents of the queue to the paging queue file. The program then reads the queue file, using the C functions FOPEN and FREAD, parses the first page request in the queue file, looks for any other page requests going to the same paging service, and then closes the file.

The page requests that are destined for the same paging service as the first page request in the queue file are removed with the first request before the queue file is closed. This same program, as in the first method described, uses ASCII text control files to convert the information in the request relating to the person or nickname to be paged and the paging service carrier that person is using, to a pageid and paging service phone number to dial. Once the conversions take place, a program dials and transmits the page message in a fashion similar to the first method described. Items are placed in the queue using a small C program employing the DosWriteQueue function.

OS/2 system semaphores may be used to "lock" the queue file when one program has it in use so that another process cannot open it while it is in use. Once the semaphore is cleared, in accordance with standard OS/2 system semaphore methods, another program can have access to the queue file. The program which reads items from the paging queue file and transmits the requests to the paging services accepts a command line argument which specifies the computer or workstation communications port the program is to use to dial into the paging service. Multiple instances of this program can be run, each controlling a different communications port, so that concurrent transmission of page requests to paging service carriers can take place. As in the first method described, page requests can be placed concurrently into the paging queue via a plurality of protocols, e.g., TCP/IP, NetBios, or "standalone" by issuing the program which places page requests in the queue from multiple OS/2 command prompts.

Figure 1 is a flow diagram illustrating the operation of a system that function in accordance with the invention. It will be seen from the Figure that a plurality of page requests may be received from a LAN or Token Ring network 10 by a computer or workstation 20 running the OS/2 operating system and a program in keeping with the invention. The page requests may involve various protocols, such as "stand-alone", NetBios, and/or TCP/IP, and be input to the system concurrently so that traffic backups are avoided. As shown, requests 11, 12, and 13, using the three protocols mentioned, are put in a queue 14 using the REXX QUEUE function in the program and may be entered FIFO. The RXQUEUE function in the program is used to set the program to the appropriate queue and then the REXX LINEIN("QUEUE:") function 15 is used to check for requests in the queue FIFO and pull page requests found therein out of the queue. The program is written to run continuously in a loop waiting for page requests to come into the queue and has a plurality of output lines, three of which lines 16, 17, and 18, are shown for respectively processing the individual requests 11, 12, and 13. The page request handled in each of the lines is appropriately checked for validity using control files 19 in the program. Page requests found to be invalid by virtue of not being convertible due to specifying an invalid name or nickname are checked and logged in a log file 24 hut not forwarded for transmission to a paging service. They may be rechecked and sent for additional processing. Requests determined to be valid are transmitted to outputs 21, 22, and 23, for communication to respective modem #1, #2, and #3, using a REXX call to a C language program. The modems may be activated simultaneously in sending the respective page messages to one or more paging services.

The program may also contain a protocol function 25 which will check to determine whether or not an acknowledgement signal is returned indicating that the page request has been properly received by the paging service and a function 26N and 26Y that will record the result in the log file 24. In the event that the transmission has been unsuccessful, a signal may be sent to the queue checking program to again try processing the particular page request.

It will accordingly be seen that a system and method have been described that are capable of efficiently handling large volumes of page request traffic in an expeditions manner for transmission to one or more paging services. While the system has been described as incorporated for operation with an IBM OS/2 operating system, it will be within the purview of those skilled in the art in the light of the foregoing description to adapt the system and programming of the invention for operation with other operating systems such as those of the IBM AS/400, the RS/6000, and the like. It is also contemplated that the system may be adapted to run on a DOS operating system when written to run as TSR (terminate and stay resident) programs and in cooperation with many other operating systems, such as VM, MVS, Sun, and Windows NT.

## Claims

1. A system for processing page requests to be send to a paging service, comprising:
modem means for receiving page requests and forwarding said requests to a paging service; and
means for receiving page requests and providing said requests to said modem means for forwarding to said paging service, the improvement wherein said receiving means comprises:
input means for concurrently accepting a plurality of page requests;
means for placing said plurality of page requests accepted by said input means in a queue; and
means for concurrently selecting page requests from said queue and providing said page requests to said modem means for forwarding to said paging service.

2. A system as in claim 1 wherein said modem means comprises a plurality of modems and said selecting means comprises means for concurrently providing said page requests respectively to said plurality of modems for forwarding.

3. A system as in claim 2 wherein said plurality of modems forward different page requests from among said plurality of page requests to different paging services.

4. A system as in claim 1 wherein said plurality of page requests comprise page requests of different protocols.

5. A system as in claim 1 wherein said page requests comprise address information and said receiving means further comprises means for addressing said page requests in response to said address information.

6. A system as in claim 1 wherein said modem means comprises a plurality of modems, each of said modems being connected to a respective telephone line for making a telephone call to a paging service for forwarding a page request thereto, and wherein said receiving means further comprises means for sending more than one page request during a telephone call.

7. A system as in claim 1 wherein said receiving means further comprises means for automatically resending a page request in response to an error message from said paging service.

8. A system as in claim 1 wherein said selecting means further comprises means for automatically prioritizing the selecting of page messages from said queue.

9. A system as in claim 1 wherein said receiving means further comprises means for recording the page requests provided to said modem means.

10. A method for processing page requests to be sent to a paging service, comprising the steps of:
concurrently accepting a plurality of page requests;
placing said plurality of page requests accepted in a queue; and
concurrently selecting page requests from said queue and providing said concurrently selected page requests for forwarding to a paging service.

11. A method as in claim 10 wherein said plurality of page requests comprise page requests of different protocols.

12. A method as in claim 10 wherein said page requests comprise address information and said providing step comprises addressing said page requests in response to said address information.

13. A method as in claim 10 wherein said providing step comprises forwarding said concurrently selected page requests by a telephone call to a paging service and sending more than one page request during a telephone call.

14. A method as in claim 10 further comprising the step of automatically resending a page request in response to an error message from said paging service.

15. A method as in claim 10 wherein said selecting step further comprises automatically prioritizing the selecting of page requests from said queue.

16. A system as in claim 10 further comprising the step of recording the page requests provided for forwarding to said paging service.
